# EUROPEAN PATENT SPECIFICATION

(11) **EP 0 403 197 B1**
(45) Date of publication and mention of the grant of the patent: **28.08.1996**
(21) Application number: 90306323.8
(22) Date of filing: 11.06.1990
(51) Int. Cl.: C08G 81/02, C08L 71/02, B01F 17/52

(54) **Polymer polyol compositions containing a grafted polyol-polyacrylate dispersant**
Polymerpolyol-Zusammensetzungen, die ein gepfropftes Polyacrylatpolyol-Dispergiermittel enthalten
Compositions de polymères-polyol contenant un agent de dispersion polyol-polyacrylate greffé

(30) Priority: 16.06.1989 US 366997
(43) Date of publication of application: 19.12.1990
(73) Proprietor: ARCO Chemical Technology, L.P., Greenville, Delaware 19807 (US)
(72) Inventor: Hayes, John E., Wilmington, Delaware 19810 (US); Gastinger, Robert G., West Chester, Pennsylvania 19380 (US)
(74) Representative: Cropp, John Anthony David

(56) References cited:
- EP-A- 0 030 307
- EP-A- 0 194 222
- DE-A- 3 245 295
- GB-A- 2 082 601
- US-A- 4 334 049
- US-A- 4 390 645
- US-A- 4 431 754
- US-A- 4 745 153

## Description

### BACKGROUND OF THE INVENTION

This invention relates to polymer polyol compositions useful as intermediates in the preparation of polyurethanes. More specifically, this invention pertains to polymer polyol compositions containing grafted polyol-polyacrylate dispersants. The grafted polyol-polyacrylate dispersants may be obtained by copolymerizing isocyanate vinyl monomers and acrylate monomers and then reacting the resulting copolymers with polyoxyalkylene polyols.

In one of its more specific aspects, this invention relates to the incorporation of grafted polyol-polyacrylate dispersants into polymer polyol compositions for the purpose of improving the stability of the dispersed vinyl polymer particles contained in the polymer polyol compositions. The stabilized polymer polyol compositions have relatively low viscosity and small average particle size.

Polymer polyols containing vinyl polymer particles dispersed in a continuous polyoxyalkylene polyol phase are well known. Also well known is the tendency of polymer polyols to undergo phase separation if they are not stabilized. Hence, polymer polyols are commonly stabilized against phase separation by the addition of a polymeric dispersant during preparation of the dispersion.

U.S. Pat. No. 4,745,153 teaches a dispersant formed by copolymerizing a vinyl-terminated polyol adduct with an ethylenically unsaturated monomer. A polymer polyol is then prepared by reacting an ethylenically unsaturated monomer, the dispersant, and a base polyol under free radical polymerization conditions.

U.S. Pat. Nos. 4,390,645 and 4,460,715 teach the use of a preformed dispersant prepared by reacting an ethylenically unsaturated isocyanate with a polyoxyalkylene polyol using a very low NCO: active hydrogen molar ratio, and then copolymerizing the monovinyl adduct thus obtained with a styrene/acrylonitrile mixture.

U.S. Pat. Nos. 4,148,840 and 4,242,249 teach the use of certain preformed polymer polyols as suitable dispersant stabilizers. U.S. Pat. Nos. 4,327,005 and 4,334,049 teach that alkylene oxide adducts of styrene/allyl alcohol copolymers can be used as polymer polyol dispersants.

Although polymer polyols prepared by prior art methods have enjoyed widespread commercial use in the polyurethane industry due to the beneficial properties which they impart to polyurethane foams, the need for further improvement in certain properties of the available polymer polyols has been recognized. Improved stability is desirable since the time period during which a polymer polyol can be stored before significant settling of the dispersed vinyl polymer particles occurs would thereby be increased. In addition, lowering the viscosity of a polymer polyol composition would reduce the handling problems encountered during processing and use of the composition. Small particle size is also desirable since plugging and fouling of processing equipment would be minimized.

Polymer polyols are commonly prepared using a mixture of styrene and acrylonitrile to form the dispersed vinyl polymer particles. It is widely recognized that increasing the ratio of styrene to acrylonitrile is beneficial since the substitution of styrene for acrylonitrile helps prevent discoloration when the polyurethane is cured and also improves the flame retardant properties of polyurethane products. However, this substitution is typically difficult to accomplish since the stability of the polymer polyols decreases with increasing styrene to acrylonitrile ratios. Viscosity and particle size are also often adversely affected by high styrene content.

Increasing the concentration of vinyl polymer dispersed in a polymer polyol is acknowledged to result in certain improvements in polyurethane properties, most notably the load bearing properties. Furthermore, the production of a polymer polyol having a high vinyl polymer level is economically attractive since the resulting product can be readily diluted after preparation to a lower solids level with additional base polyol. Thus, a larger volume of polymer polyol containing a conventional amount of dispersed vinyl polymer can be produced using existing equipment. However, increasing the vinyl polymer content of a polymer polyol generally leads to increased viscosity and lower dispersion stability using prior art methods.

Clearly, there is a need for improved dispersants capable of providing stable, low viscosity polymer-polyol compositions especially when such compositions have high concentration of dispersed solids or high styrene/acrylonitrile ratios.

### SUMMARY OF THE INVENTION

This invention affords, according to a first aspect, a grafted polyol-polyacrylate dispersant suitable for enhancing the stability of a polymer polyol composition as compared to the stability of the polymer polyol composition in the absence of the grafted polyol-polyacrylate dispersant, wherein said grafted polyol-polyacrylate dispersant comprises:
(a) a random copolymer, soluble in a polyoxyalkylene polyol of:
   (i) an isocyanate vinyl monomer; and
   (ii) an acrylate monomer; and
(b) a polyoxyalkylene polyether;
wherein the random copolymer and polyoxyalkylene polyether are connected through at least one urethane graft site.

This invention additionally provides according to a second aspect, a stable polymer polyol composition comprising a continuous phase, a disperse phase within the continuous phase, and a grafted polyol-polyacrylate dispersant wherein:
(a) the disperse phase comprises vinyl polymer particles;
(b) the continuous phase is a polyoxyalkylene polyol; and
(c) the grafted polyol-polyacrylate dispersant comprises a grafted polyol-polyacrylate according to the above first aspect soluble in the continuous phase;
wherein the grafted polyol-polyacrylate dispersant is employed in an amount effective to enhance the stability of the resulting polymer polyol composition as compared to the stability of the polymer polyol composition in the absence of the grafted polyol-polyacrylate dispersant.

Further, there is provided, according to a third aspect a polymer polyol composition as described in the above first aspect wherein the vinyl polymer is a styrene/acrylonitrile copolymer.

There is also provided a process for producing a polymer composition as described in the above second aspect comprising the steps of:
(a) copolymerizing said isocyanate vinyl monomer and said acrylate monomer in the presence of an amount of a first portion of a free radical polymerization initiator effective to form a random copolymer wherein the isocyanate group of the isocyanate vinyl monomer is predominantly unreacted;
(b) reacting the random copolymer with a first portion of a polyoxyalkylene polyol miscible with the random copolymer in the presence of an amount of a urethane-forming catalyst effective to accomplish substantially complete reaction of the isocyanate group to form a grafted polyol-polyacrylate dispersant;
(c) reacting the grafted polyol-polyacrylate dispersant, a second portion of a polyoxyalkylene polyol, and a vinyl monomer in the presence of an amount of a second portion of a free radical polymerization initiator effective to form the polymer polyol composition, said grafted polyol-polyacrylate dispersant being employed in an amount effective to enhance the stability of the polymer polyol composition as compared to the stability of the polymer polyol composition in the absence of the grafted polyol-polyacrylate dispersant.

According to a fifth aspect of the present invention there is provided a process for producing a grafted polyol-polyacrylate dispersant as described in the above first aspect said process comprising the steps of:
(a) copolymerizing said isocyanate vinyl monomer and said acrylate monomer in the presence of an amount of a free radical polymerization initiator effective to form a random copolymer wherein the isocyanate group of the isocyanate vinyl monomer is predominantly unreacted; and
(b) reacting the random copolymer with a polyoxyalkylene polyol miscible with the random copolymer in the presence of an amount of a urethane-forming catalyst effective to accomplish substantially complete reaction of the isocyanate group.

There is also provided a polyurethane comprising the reaction of a polyisocyanate and a polymer polyol composition as described in the above second aspect or a polymer polyol composition including a dispersant as described in the above first aspect or a polymer polyol composition obtained by a method or process as described in the above third to fifth aspects.

### DETAILED DESCRIPTION OF THE INVENTION

The dispersants of the present invention are prepared by copolymerizing an isocyanate vinyl monomer and an acrylate monomer in the presence of a free radical polymerization initiator. The monomers are preferably incorporated in a substantially random fashion into the resulting copolymer. The monomers react primarily through the carbon-carbon double bond present in each monomer.

The isocyanate vinyl monomer may be any monomer containing at least one vinyl functional group (i.e., a carbon-carbon double bond capable of polymerizing in free radical manner) and at least one isocyanate functional group. It is preferred that the isocyanate functional group(s) be hindered. The term hindered isocyanate in this context is meant to signify an isocyanate (-NCO) group which is normally substantially unreactive with an active hydrogen functional group (for example, the hydroxyl group of a polyol) in the absence of a urethane-forming catalyst. In other words, the structure of the hindered isocyanate vinyl monomer preferably is such that no substantial reaction of the isocyanate group takes place during the copolymerization with the acrylate monomer. In general, it is desirable that less than 25% conversion of the isocyanate takes place during copolymerization. One way to lower the reactivity of the isocyanate group is to have substituents in close proximity to the isocyanate group which sterically interfere with the approach of an active hydrogen group to the isocyanate group.

Alternatively, substituents on the vinyl isocyanate monomer can be varied to influence the reactivity of the isocyanate group by virtue of the inductive effects attributable to those substituents.

Suitable hindered isocyanate vinyl monomers may have the following general structure (1): 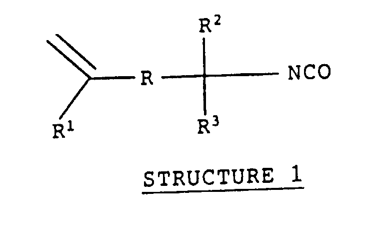 wherein R is a divalent hydrocarbon radical, R¹ is hydrogen or methyl, and R² and R³ separately represent a monovalent hydrocarbon radical. For example, R may be an aromatic ring or an aliphatic chain. The aromatic ring or aliphatic chain may bear additional substituents, as long as such substituents do not interfere with the desired reactivity of the vinyl or isocyanate groups. R² and R³ may be methyl, ethyl, phenyl, or any other group which provides sufficient steric hindrance to make the isocyanate group substantially unreactive towards an active hydrogen group under uncatalyzed reaction conditions.

(1,1-Dialkyl-1-isocyanatomethyl) vinyl aromatic monomers, are one class of hindered isocyanate vinyl monomers particularly suitable for use in this invention. Shown below is (1,1-dimethyl-1-isocyanatomethyl)-m-isopropenyl benzene (also known as TMI), a preferred hindered isocyanate vinyl monomer since it is available commercially.

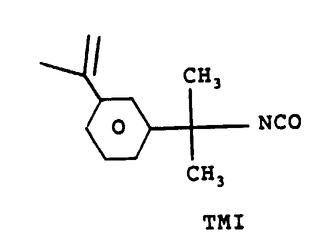

Aromatic isocyanate monomers of Structure 2 are also useful in this invention, where R¹, R², and R³ have the same meaning as in Structure 1. In this embodiment, the isocyanate group is hindered by adjacent substituents on the aromatic ring.

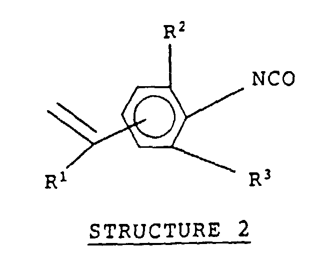

The acrylate monomer which is copolymerized with the hindered isocyanate vinyl monomer in the present invention may be any ester of acrylic acid which is polymerizable in a free radical manner.

The preferred acrylate monomers are the C₁ to C₅ alkyl esters of acrylic acid. Specific examples of suitable acrylates include methyl acrylate, ethyl acrylate, propyl acrylate, isopropyl acrylate, t-butyl acrylate, sec-butyl acrylate, isobutyl acrylate, n-butyl acrylate, and their mixtures. The most preferred acrylate monomer is n-butyl acrylate.

Other ethylenically unsaturated monomers such as methacrylates, monovinyl aromatic monomers, unsaturated nitriles, and the like can be used in combination with the acrylate monomer, although it is preferred that such mixtures contain at least 75 mole percent of one or more acrylate monomers. It has surprisingly been found that a high proportion of acrylate monomer in the random copolymer yields a copolymer which is highly soluble in the polyoxyalkylene polyol component of the dispersant. This solubility permits the reaction of the isocyanate groups on the copolymer with the polyol hydroxyl groups to proceed much more readily than if two phases are present. In addition, the high polyoxyalkylene polyol solubility of random copolymers containing high proportions of acrylate monomer permits such copolymers to achieve significantly higher average molecular weights while still remaining soluble than is possible using monomers such as styrene or acrylonitrile. A higher molecular weight will mean that, for a given concentration of isocyanate vinyl monomer, an individual copolymer chain will on average contain a greater number of isocyanate groups available for reaction with the polyol hydroxyl groups. Thus, a high degree of grafting will be present in the dispersant of this invention. As a result, a relatively large fraction of the dispersant (preferably, greater than 10 percent) has a GPC number average molecular weight (relative to polypropylene glycol calibration standards) of more than 100,000. Without intending to limit the invention to a particular theory, it is believed that this feature of the dispersants of this invention contributes to their superior effectiveness as polymer polyol stabilizers in high solids and high styrene compositions.

Although any weight ratio of isocyanate vinyl monomer to ethylenically unsaturated monomer may be used to prepare the random copolymer, it is preferred that the ratio be from 0.5:99.5 to 50:50. For reasons of economy and to prevent excessive cross-linking of the dispersant, it is desirable that the proportion of isocyanate vinyl monomer be fairly low. However, in order that a sufficient number of isocyanate functional groups be present in the random copolymer to provide an adequate degree of grafting in the dispersant, the amount of isocyanate vinyl monomer used must not be too small. For these reasons, the most preferred isocyanate vinyl monomer: ethylenically unsaturated monomer ratio is from 2:98 to 35:65.

The random copolymers of this invention can be prepared by alternative methods. In one method, the in situ method, the random copolymer is obtained by copolymerizing the isocyanate vinyl monomer (preferably, a hindered isocyanate vinyl monomer) and the acrylate monomer in the presence of a polyoxyalkylene polyol and a free radical polymerization initiator. To form the grafted polyol-polyacrylate dispersant, the random copolymer and the polyol are reacted in the presence of a urethane-forming catalyst.

In another method, the blend method, the random copolymer is formed by polymerizing the acrylate and isocyanate vinyl monomers in the presence of an organic solvent and a free radical polymerization initiator, but without the polyoxyalkylene polyol. The solvent keeps the reaction mixture fluid and stirrable. The random copolymer is then blended with the polyol and reacted using a urethane-forming catalyst to yield a dispersant of this invention.

Of these two methods, the in situ method is preferred as it is simpler to execute in commercial practice and does not require the use of a solvent which would need to be recovered at some later point in the process.

Regardless of the method chosen, the monomers comprising the random copolymer may be reacted using conditions well-known to those skilled in the art of free-radical polymerization. The entire amount of the monomers may be charged to a suitable reactor vessel before polymerization is initiated or, alternatively, the monomers may be added in a continuous fashion while polymerization is in progress. If the monomers are significantly different in reactivity, it may be desirable to charge all or most of one monomer to the vessel before initiation and to add all or most of the other more reactive monomer(s) to the mixture after initiation.

The copolymerization may be carried out at any suitable temperature; the temperature range of from 60 to 150°C is generally preferred. If the in situ method is used, the reaction temperature should not be so high as to cause substantial reaction of the isocyanate with the polyol hydroxyl groups.

Suitable free-radical polymerization initiators useful in producing the random copolymers of this invention are the free radical type of vinyl polymerization initiators, such as the peroxides, persulfates, perborates, percarbonates and azo compounds. Specific examples include, but are not limited to, 2,2'-azobis(isobutyronitrile) (AIBN), 2,2'-azobis(2-methyl butyronitrile), dibenzoyl peroxide, lauroyl peroxide, di-t-butyl peroxide, diisopropyl peroxide carbonate, t-butyl peroxyethylhexanoate, t-butylperpivalate, 2,5-dimethyl-hexane-2,5-di-per-2-ethyl hexoate, t-butyl perneodecanoate, t-butylperbenzoate, t-butyl percrotonate, t-butyl perisobutyrate, and di-t-butyl perphthalate. Other suitable initiators or mixtures of initiators may be employed, of course. The concentration of initiator is not critical, but will typically vary within wide limits of from 0.1 to 5.0 weight percent based on the total weight of monomer. Chain transfer agents may also be used to control the molecular weight of the random copolymer, although they are generally not needed due to the inherently high solubility of the random copolymers of this invention.

A random copolymer prepared using the procedures described above is reacted with a polyoxyalkylene polyol in the presence of a urethane-forming catalyst to yield a dispersant of this invention. The dispersant will have a graft-type structure as a result of the isocyanate/polyol hydroxy reaction in which segments of random copolymer are connected to polyoxyalkylene polyether segments through urethane graft sites. Each graft site comprises a urethane bond

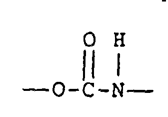

The dispersant may contain graft polymer consisting of one segment of the random copolymer connected to one or more segments of polyoxyalkylene polyether derived from the polyoxyalkylene polyol. The grafted polyol-polyacrylate dispersant thus can have a "comb" structure, with several polyoxyalkylene polyether segments grafted onto a backbone consisting of the random copolymer segment.

Cross-linking results when more than one end of a polyoxyalkylene polyol reacts with isocyanate groups on separate random copolymer segments. The grafted polyol-polyacrylate thus formed is comprised of at least two segments of the random copolymer and at least one segment of polyoxyalkylene polyether derived from the polyol. The polyoxyalkylene polyether segment thereby forms a bridge between at least two segments of the random copolymer; each of at least two ends of the bridge is attached to a random copolymer segment by a urethane bond. The dispersant of this invention thus can be a mixture of cross-linked polymers containing different numbers of connected random copolymer and polyoxyalkylene polyether segments. An individual dispersant polymer chain, for example, may have two, three, four, or more polyoxyalkylene polyether segments. Some of these segments may not be attached at each end to a random copolymer segment. Since the polyoxyalkylene polyol used may be a triol, as described below, it is possible for one polyoxyalkylene polyether segment to be attached at each of three ends to three different random copolymer segments. At the same time, an individual dispersant polymer chain may contain more than two random copolymer segments, each of which is attached to a polyoxyalkylene polyether segment by a urethane bond. Thus, the dispersant of this invention can have a highly branched structure and may be considerably higher in molecular weight than the molecular weight of either the random copolymer or the polyoxyalkylene polyether polyol.

The polyoxyalkylene polyols most suitable for use in the preparation of the dispersant of this invention are the polymerization products of an alkylene oxide or a mixture of alkylene oxides. The functionality of the polyol should be at least about one, but can be varied as desired by changing the structure of the active hydrogen containing initiator or by any other means known in the art. Diols and triols are particularly preferred. Suitable alkylene oxides include, but are not limited to, ethylene oxide, propylene oxide and 1,2-butylene oxide. Propylene oxide polyols and propylene oxide/ethylene oxide copolyols (either random or end-capped) are most preferred. The polyoxyalkylene polyether polyols may be prepared by any of the methods well-known to those skilled in the art and may contain small amounts of unsaturation. Polyoxyalkylene polyols in which the terminal hydroxyl groups have been replaced with primary or secondary amine groups or with other active hydrogen moieties are also suitable for use in this invention. The number average molecular weight of the polyoxyalkylene polyol is preferably between 1000 and 10,000 and most preferably is from 2000 to 7000.

The urethane-forming catalyst used to prepare the dispersant may be any organic or metal-containing compound which catalyzes the reaction of an isocyanate with an active hydrogen group. Suitable urethane-forming catalysts include, but are not limited to, tin carboxylates, dialkyl tin dicarboxylates, tertiary amines, organotin compounds, dialkyltin mercaptides, dialkyltin thioesters, and mixtures thereof. The amount of urethane-forming catalyst used is not critical and will vary depending on the catalyst used, the structure of the isocyanate and active hydrogen groups, as well as other reaction conditions such as temperature. In general, urethane-forming catalyst concentrations of from 1 ppm to 1.0 weight percent are suitable.

Any conditions sufficient to accomplish substantially complete reaction of the isocyanate groups on the random copolymer may be employed. It is not critical that the isocyanate groups be quantitatively reacted. In general, about 0-20 percent of the isocyanate groups may remain unreacted in the dispersant obtained. Typically, the reaction temperature may be from about 50 to 150°C. The reaction may be carried out in the presence of an inert organic solvent.

The weight ratio of random copolymer to polyoxyalkylene polyol is preferably in the range of from 5:95 to 50:50. Normally the proportion of isocyanate vinyl monomer in the random copolymer and the proportion of random copolymer in the polyol will be adjusted so that the percent isocyanate (% NCO) in the random copolymercopolymer/polyoxyalkylene polyol mixture immediately prior to dispersant formation is from 0.05 to 1.0 weight percent or, most preferably, from 0.2 to 0.6 weight percent.

The stable polymer polyol compositions of this invention are comprised of a continuous phase, a disperse phase suspended within the continuous phase, and the dispersant previously described. The continuous phase is a polyoxyalkylene polyol, which may be the same as or different than the polyoxyalkylene polyol used to prepare the dispersant. Suitable polyoxyalkylene polyols useful as the polymer polyol continuous phase include any and all of the polyols usable in the preparation of the dispersant.

The disperse phase is comprised of small vinyl polymer particles. The presence of the grafted polyol-polyacrylate dispersant in the polymer polyols of this invention generally results in an average vinyl polymer particle size of about 3 µm or less. Preferably, the average vinyl polymer particle size is less than about 1µm. The monomer or monomers comprising the vinyl polymer may be any monomer containing a carbon-carbon double bond which is polymerizable in a free radical manner. Suitable ethylenically unsaturated monomers include, but are not limited to, acrylates and substituted acrylates, monovinyl aromatic monomers including styrene and substituted styrenes, unsaturated nitriles including acrylonitrile, acrylic acid and substituted acrylic acids, conjugated and non-conjugated dienes, vinyl esters, vinyl ethers, allylic alcohols, unsaturated anhydrides, vinyl ketones, maleimide, N-substituted maleimides, as well as mixtures of these compounds. Preferably, however, the vinyl polymer is polystyrene or a styrene/acrylonitrile copolymer. Because of the stability imparted to the polymer polyol composition by the dispersant of this invention, it is possible to prepare polymer polyols of satisfactory storage stability and viscosity which contain high levels of styrene.

In a preferred embodiment of the invention, the weight ratio of styrene to acrylonitrile is from 25:75 to 99:1. In another preferred embodiment, the vinyl polymer is a homopolymer of styrene.

Any amount of dispersant sufficient to enhance the stability of the polymer polyol as compared to the stability of the composition in the absence of the dispersant is usable. It is preferred that the dispersant be employed in an amount of from 0.1 to 20 weight percent based on the total weight of the polymer polyol composition. The range of from 0.5 to 6 weight percent is most preferred.

The weight ratio of the disperse phase to the continuous phase is not critical, but is preferably varied from 1:19 to 1:1. One of the advantages of the present invention is that polymer polyol compositions containing relatively high levels of vinyl polymer (i.e., over 20% solids) may be obtained which are stable and low in viscosity.

The polymer polyols of this invention may be formed by polymerizing a vinyl monomer or mixture of vinyl monomers in a polyol mixture comprising at least one polyoxyalkylene polyol and a grafted polyol-polyacrylate dispersant of this invention in the presence of one or more free radical initiators at a temperature from 60°C to 150°C. The free radical initiator may be any of the compounds capable of catalyzing the addition polymerization of vinyl monomers. Those initiators described herein as being useful in preparing the random copolymer component of the dispersant are also suitable for use in the vinyl monomer polymerization. The amount of the initiator is not critical, but should be sufficient to effect substantial polymerization of the vinyl monomer(s). Typical conditions for the preparation of polymer polyols are described in U.S. Pat. No. 4,745,153.

Any conventional process for preparing polymer polyols can be employed including batch, semi-batch, and continuous processes. The preferred process is a semi-batch process in which all or at least a major amount of the dispersant is added in the reactor charge and the major amount of polyol is added in the feed charge. It is most preferred to add all of the dispersant in the reactor charge. If a plurality of continuous stirred tank reactors (CSTR) in series is employed, the charge to the first CSTR preferably includes all or at least the major amount of dispersant. To the second CSTR, in addition to the product feed from the first CSTR, will be added the feed charge containing the major amount of polyol.

After polymerization of the vinyl monomer to form the disperse phase, the polymer polyol composition may be diluted with a polyoxyalkylene polyol to adjust the vinyl polymer content to the desired level. This polyoxyalkylene polyol may be any of the types of polyol described previously as suitable for the preparation of the dispersant, but may be the same as or different than the other polyols employed. Small amounts of additives such as antioxidants may be added to the polymer polyol composition if desired.

The polymer polyol of the present invention may be incorporated into a polyurethane formulation using any of the methods well-known in the art for utilizing polymer polyols. Methods of reacting polymer polyols with polyisocyanates to yield polyurethane products are described, for example, in U.S. Pat. No. 4,785,026, 4,338,408, 4,342,687, 4,381,353, 4,198,488, and 3,383,351. The polymer polyols of this invention are particularly useful for the preparation of slab or high resiliency (HR) flexible polyurethane foams.

Such foams are typically prepared using a blowing agent such as a halocarbon, water, or carbon dioxide, a urethane forming catalyst such as an organotin or tertiary amine compound, and a foam stabilizer such as a silicone surfactant. Other additives such as flame retardants may also be present.

The following examples further illustrate the preparation of the random copolymers, dispersants, polymer polyols and polyurethanes of this invention, but are not limitative of the invention in any manner.

From the foregoing description, one skilled in the art can readily ascertain the essential characteristics of this invention, and, without departing from the spirit and scope thereof, can make various changes and modifications of the invention to adopt it to various usages, conditions, and embodiments. All of these variations are considered to be encompassed by the present invention.

### EXAMPLES

### Reaction Procedure A

A 3 liter reactor equipped with a stirrer, a condenser, a thermometer, and an addition tube was charged with the reactor charge. The reactor charge was heated to 120°C under a nitrogen blanket and the feed charge added over a 2.0 hr. period. Upon completion of the addition, the reaction product was held at 120°C for 30 min and then stripped of residual monomer (1.5 hr.; 120°C; 667 Pa (<5 mm Hg) pressure).

### Reaction Procedure B

A 2 liter reactor equipped with a stirrer, a condenser, and a thermometer was charged with the reactor charge. The reactor charge was heated to 100°C under a nitrogen blanket before adding the urethane-forming catalyst. The reaction mixture was stirred for an additional 1 hr. at 100°C.

### EXAMPLES 1-9

These examples demonstrate the preparation of random copolymers of n-butyl acrylate (BA) and (1,1-dimethyl-1-isocyanate methyl)-m-isopropenyl benzene (TMI) in polyol media. Procedure A and the amounts, materials, and process conditions identified in Table 1 were used to prepare the copolymers. Base Polyol W was a random triol copolymer of propylene oxide (88 wt. %) and ethylene oxide (12 wt. %) having a hydroxy number of 48 and a number average molecular weight of about 3500. Base Polyol X was a propylene oxide triol capped with 15.5 wt. % ethylene oxide having a hydroxy number of 26 and a number average molecular weight of about 6500. The initiator used was VAZO 67 [azobis(2-methyl butyronitrile), sold commercially by E.I. duPont de Nemours & Co.].

### EXAMPLES 10-18

These examples demonstrate the preparation of the dispersants of this invention by the reaction of the random copolymers of Examples 1-9 with the polyoxyalkylene polyols in which they were prepared (the In Situ Method). In this method, the polyol hydroxyl groups react with the isocyanate groups of the random copolymer to form urethane attachment sites. Procedure B was followed; Table 2 shows the charges used and the properties of the resultant dispersants. In Examples 11, 14-16, and 18, the random copolymer/polyol mixtures obtained from Examples 1-9 were diluted with additional base polyol before addition of the urethane-forming catalyst. Two types of urethane-forming catalyst were used: T-9 (stannous octoate; a product of Air Products and Chemicals, Inc.) and UL-1 (an organotin catalyst produced by Witco).

The gelation observed in Example 13 is believed to be at least partially due to the relatively high initial NCO concentration, although this should not be interpreted as an upper limit on the NCO concentration usable in accordance with this invention.

### EXAMPLES 19-22

The examples demonstrate the preparation of stable polymer polyols using the dispersants of Examples 10-18. Despite the use of high solids levels and high styrene/acrylonitrile ratios, all of the polymer polyols thus obtained were relatively low in viscosity and had average disperse particle diameters less than 1.0 µm (determined using a Coulter N4 Particle Size Analyzer with o-xylene or isopropyl alcohol as the dispersing medium). The polymer polyols were found to be suitable for use in the preparation of high quality polyurethane foams. The polymer polyols produced were expected to show excellent storage stability, as indicated by the low values obtained for Weight Percent Centrifugable Solids. The experimental procedure used to measure Weight Percent Centrifugable Solids is described in U.S. Pat. Appl. Ser. No. 07/197,938. Procedure A was used to prepare the polymer polyols. Table 3 gives the reactant charges used as well as the properties of the polymer polyols. Base Polyol Y was a propylene oxide triol of about 4800 number average molecular weight having a hydroxyl number of 33 and a 14 wt. % ethylene oxide end-cap. The initiator used was VAZO 67.

### EXAMPLE 23

This example demonstrates the preparation of a butyl acrylate/TMI random copolymer in an organic solvent medium. Procedure A was used with the following charges:

| | | |
|---|---|---|
| Reactor Charge: | Xylene | 100 |
| Feed Charge: | Butyl Acrylate | 360 |
| | TMI | 40 |
| | Xylene | 500 |
| | Vazo 67 | 7.5 |

After stripping residual monomer and solvent, the product had a viscosity of 58 Pas (58,000 cps) and an isocyanate content of 2.25 wt.%.

### EXAMPLE 24

This example demonstrates the preparation of the dispersant of this invention by the Blend Method.

A 2 liter reactor equipped with a stirrer, a condenser, and a thermometer, was charged with 332 grams of Polyol W and 80 grams of the copolymer from Example 23. The mixture was heated to 100°C under a nitrogen blanket before adding 0.76 grams of T-9 catalyst. The reaction mixture was allowed to stir for an additional 1 hr. at 100°C. The resulting product had a viscosity of 7.95 Pas (7950 cps), an isocyanate content of less than 0.03 wt %; 22% of the product had a GPC number average molecular weight greater than 100,000.

### EXAMPLE 25-26

These examples demonstrate the synthesis of polymer polyols using a dispersant prepared by the Blend Method. Procedure A was used and Table 4 contains the charges and properties of the resultant polymer polyols. VAZO 67 was used as the initiator. The polymer polyol of Example 25 had properties comparable to those of the product obtained in Examples 19-22. Example 26 shows that polymer polyols of satisfactory quality may even be obtained using the dispersant of this invention when only styrene is present in the dispersed vinyl polymer particles, in contrast to the poor results obtained for similar all-styrene compositions produced by known prior art methods.

### EXAMPLES 27-30

These examples illustrate the use of the polymer polyols of Examples 19-22 in the preparation of slab polyurethane foams. the polyurethane foams are prepared by charging the amounts of polymer polyol, water, catalyst, and silicone surfactant indicated in Table 5 into a one-liter cylindrical container equipped with a mechanical stirrer. The mixture is stirred at ambient temperature for about 30 seconds at about 2500 rpm before introducing the indicated amount of toluene diisocyanate into the container with stirring. After stirring for about another 10 seconds, the contents of the container are poured into a cardboard cake box and the foam allowed to rise. After the foam rise is completed, the foam is cured at room temperature for about one week.

**TABLE 5**

| Ingredient | Amount (parts by wt.) |
|---|---|
| Polymer Polyol (From Examples 19-22) | 100 |
| Water | 2.2 |
| L-6202 silicone surfactant¹ | 0.8 |
| Amine² | 0.3 |
| T-10 Organotin Catalyst (50% Active)³ | 0.4 |
| Toluene Diisocyanate | 110 Index |

| | |
|---|---|
| ¹Available from Union Carbide Corporation. | |
| ²Prepared by blending 2 parts B11 and 1 part 33LV, both available from Air Products and Chemicals, Inc., and 3 parts Thanol F3020, available from ARCO Chemical Company. | |
| ³Available from Air Products and Chemicals, Inc. | |

### EXAMPLES 31-34

These examples illustrate the use of the polymer polyols of Examples 19-22 in the preparation of slab polyurethane foams containing a flame retardant and a conventional polyoxyalkylene polyol in addition to the polymer polyol (Table 6). The same procedure described in Examples 27-30 is followed.

**TABLE 6**

| COMPONENT | parts by wt. |
|---|---|
| ARCOL 1130¹ | 60 |
| Polymer Polyol (From Examples 19-22) | 40 |
| Water | 4.2 |
| Niax 5750 Surfactant² | 1 |
| Niax A-200 Catalyst³ | 0.23 |
| T-9 Catalyst⁴ | 0.15 |
| Thermolin 101 Flame Retardant⁵ | 10 |
| Toluene Diisocyanate | 108 Index |

| | |
|---|---|
| ¹ A glycerin initiated random PO/EO polyol having a hydroxyl number of 48 and containing predominately secondary hydroxyl groups; available from ARCO Chemical Company | |
| ² Silicone surfactant, made by Union Carbide Corp. | |
| ³ Amine catalyst, made by Union Carbide Corp. | |
| ⁴ Organotin catalyst, made by Air Products and Chemicals, Inc. | |
| ⁵ Tetrakis(2-Chloroethyl)Ethylene Diphosphate, made by Olin Corporation | |

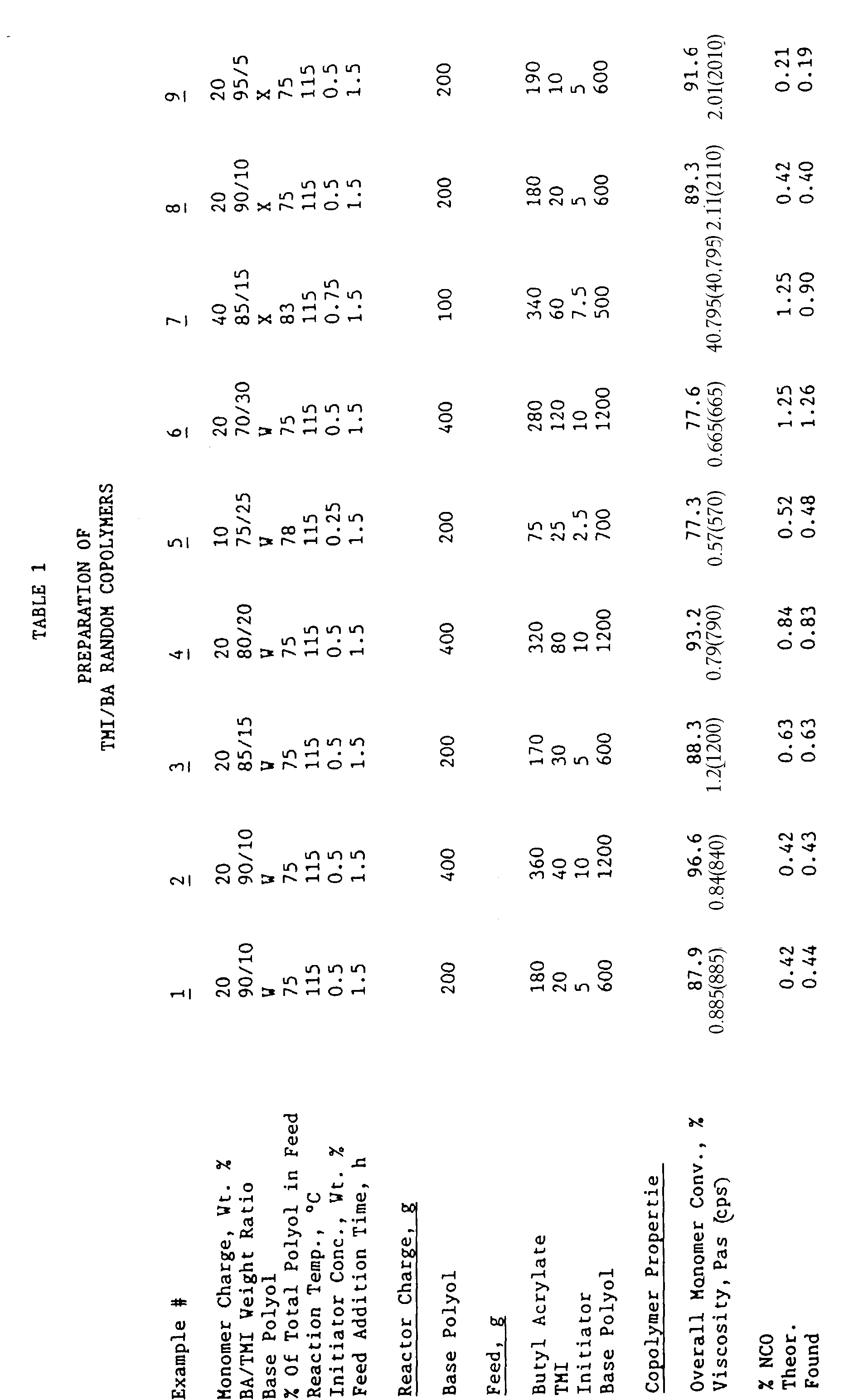

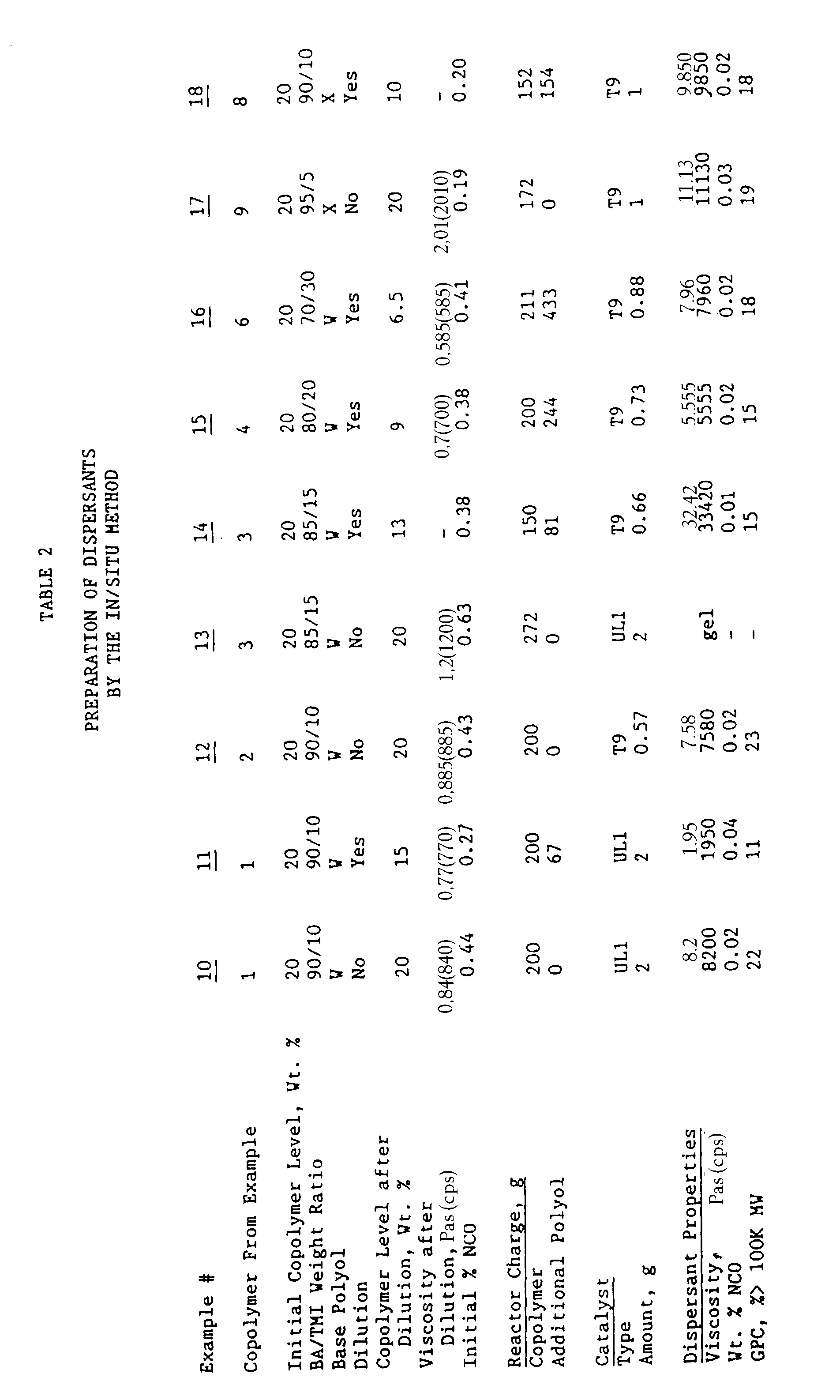

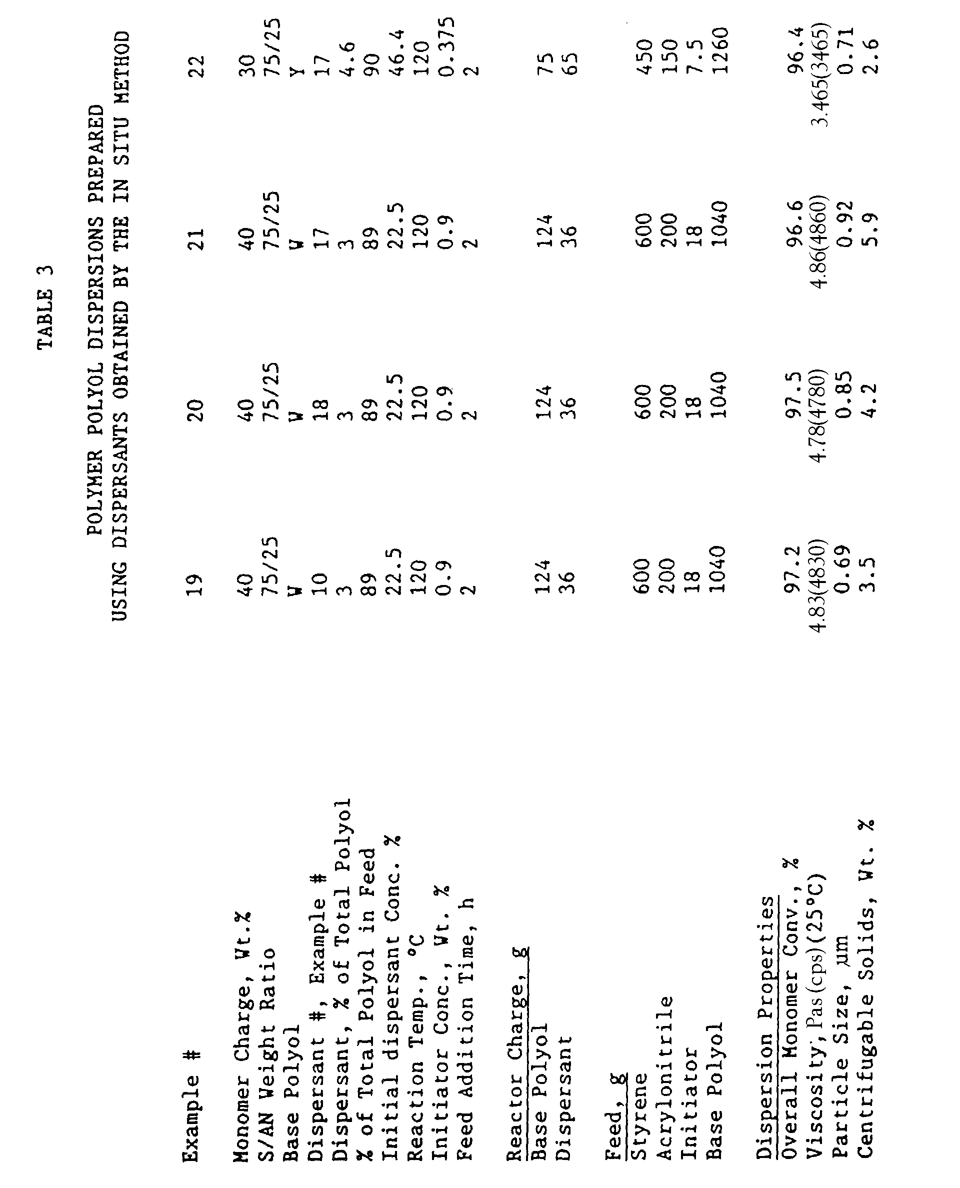

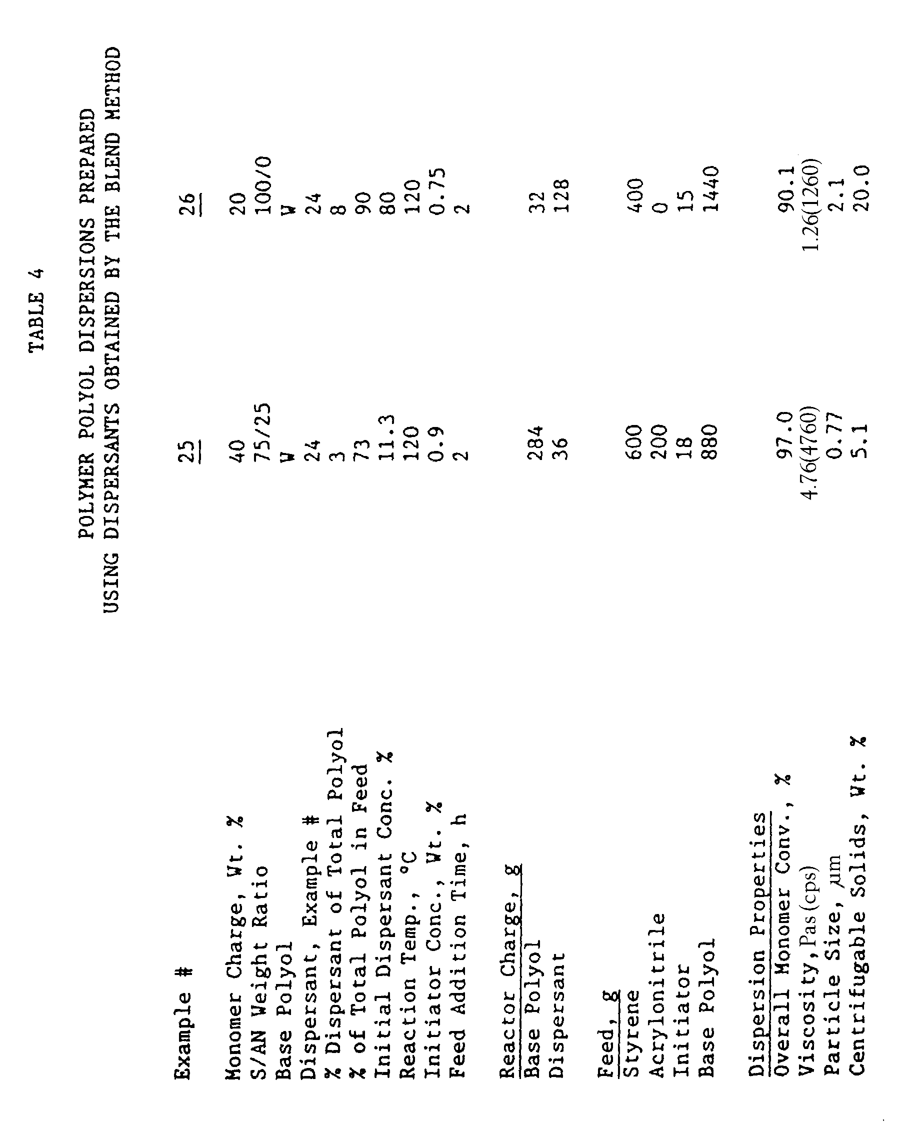

VAZO, THANOL, ARCOL, 1130, NIAX and THERMOLIN are trade marks which may be registered in one or more of the territories designated in this application.

## Claims

1. A grafted polyol-polyacrylate dispersant suitable for enhancing the stability of a polymer polyol composition as compared to the stability of the polymer polyol composition in the absence of the grafted polyol-polyacrylate dispersant, wherein said grafted polyol-polyacrylate dispersant comprises:
(a) a random copolymer, soluble in a polyoxyalkylene polyol of:
(i) an isocyanate vinyl monomer; and
(ii) an acrylate monomer; and
(b) a polyoxyalkylene polyether;
wherein the random copolymer and polyoxyalkylene polyether are connected through at least one urethane graft site.

2. The grafted polyol-polyacrylate dispersant of claim 1 wherein at least 10 percent of the dispersant has a number average molecular weight greater than 100,000 as measured by gel permeation chromatography relative to polypropylene glycol calibration standards.

3. The grafted polyol-polyacrylate dispersant of claim 1 or claim 2 wherein the isocyanate vinyl monomer is a sterically hindered isocyanate vinyl monomer.

4. The grafted polyol-polyacrylate dispersant of claim 3 wherein the isocyanate vinyl monomer is a (1,1-dialkyl-1-isocyanatomethyl) vinyl aromatic monomer.

5. The grafted polyol-polyacrylate dispersant of any one of claims 1 to 4 wherein the acrylate monomer is a C₂-C₅ alkyl acrylate.

6. The grafted polyol-polyacrylate dispersant of claim 5 wherein the alkyl acrylate monomer is n-butyl acrylate.

7. The grafted polyol-polyacrylate dispersant of any one of claims 1 to 6 wherein the polyoxyalkylene polyether is selected from propylene oxide polymers, propylene oxide/ethylene oxide copolymers, and mixtures thereof.

8. The grafted polyol-polyacrylate dispersant of any one of claims 1 to 7 wherein the polyoxyalkylene polyether has a number average molecular weight of from 1000 to 10,000.

9. The grafted polyol-polyacrylate dispersant of any one of claims 1 to 8 wherein the weight ratio of sterically hindered isocyanate vinyl monomer: acrylate monomer is from 0.5:99.5 to 50:50

10. The grafted polyol-polyacrylate dispersant of claim 9 wherein the weight ratio of sterically hindered isocyanate vinyl monomer: alkyl acrylate monomer is from 2:98 to 35:65.

11. A stable polymer polyol composition comprising a continuous phase, a disperse phase within the continuous phase, and a grafted polyolpolyacrylate dispersant wherein:
(A) the disperse phase comprises vinyl polymer particles:;
(B) the continuous phase is a polyoxyalkylene polyol; and
(C) the grafted polyol-polyacrylate dispersant comprises a grafted polyol-polyacrylate as claimed in any one of claims 1 to 10 soluble in the continuous phase;
wherein the grafted polyol-polyacrylate dispersant is employed in an amount effective to enhance the stability of the resulting polymer polyol composition as compared to the stability of the polymer polyol composition in the absence of the grafted polyol-polyacrylate dispersant.

12. The polymer polyol composition of claim 11 wherein the vinyl polymer is a styrene/acrylonitrile copolymer.

13. The polymer polyol composition of claim 11 or claim 12 wherein the polyoxyalkylene polyol has a molecular weight of from 1000 to 10,000.

14. The polymer polyol composition of any one of claims 11 to 13 wherein the polyoxyalkylene polyol is selected from propylene oxide polyols, propylene oxide/ethylene oxide copolyols, and mixtures thereof.

15. The polymer polyol composition of any one of claims 11 to 14 wherein the weight ratio of disperse phase:continuous phase is from 1:19 to 1:1.

16. The polymer polyol composition of any one of claims 11 to 15 wherein the grafted polyol-polyacrylate dispersant is employed in an amount of from 0.1 to 20 weight percent based on the total weight of the polymer polyol composition.

17. A stable polymer polyol composition as claimed in claim 11 wherein the disperse phase comprises styrene/acrylonitrile copolymer or styrene homopolymer particles; the polyoxyalkylene polyol has a number average molecular weight of from 2000 to 7000; and the grafted polyol-polyacrylate dispersant is derived from a sterically hindered isocyanate vinyl monomer, a C₁-C₅ alkyl acrylate monomer, and a polyoxyalkylene polyether having a number average molecular weight of from 2000 to 7000.

18. The polymer polyol composition of claim 17 wherein the weight ratio of styrene:acrylonitrile in the styrene/acrylonitrile copolymer is from 25:75 to 99:1.

19. A process for producing a polymer polyol composition as claimed in claim 11, claim 13 or claim 14 which comprises reacting said polyoxyalkylene polyol, said grafted polyol-polyacrylate dispersant and vinyl monomer in the presence of a free radical polymerization initiator.

20. A method for enhancing the stability of a polymer polyol comprising vinyl polymer particles dispersed in a continuous polyoxyalkylene polyol phase against phase separation, the method comprising incorporating into the polymer polyol an effective amount of a grafted polyol-polyacrylate dispersant as claimed in any one of claims 1 to 10.

21. A process for producing a polymer polyol composition as claimed in any one of claims 11 to 18 comprising the steps of:
(a) copolymerizing said isocyanate vinyl monomer and said acrylate monomer in the presence of an amount of a first portion of a free radical polymerization initiator effective to form a random copolymer wherein the isocyanate group of the isocyanate vinyl monomer is predominantly unreacted;
(b) reacting the random copolymer with a first portion of a polyoxyalkylene polyol miscible with the random copolymer in the presence of an amount of a urethane-forming catalyst effective to accomplish substantially complete reaction of the isocyanate group to form a grafted polyol-polyacrylate dispersant;
(c) reacting the grafted polyol-polyacrylate dispersant a second portion of a polyoxyalkylene polyol, and a vinyl monomer in the presence of an amount of a second portion of a free radical polymerization initiator effective to form the polymer polyol composition, said grafted polyol-polyacrylate dispersant being employed in an amount effective to enhance the stability of the polymer polyol composition as compared to the stability of the polymer polyol composition in the absence of the grafted polyol-polyacrylate dispersant.

22. The process of claim 21 wherein the polymer polyol composition is diluted after step (c) with a third portion of a polyoxyalkylene polyol.

23. The process of claim 21 or claim 22 wherein the copolymerization step (a) is carried out in the presence of the first portion of the polyoxyalkylene polyol.

24. The process of claim 21 or claim 22 wherein copolymerization step (a) is carried out in the presence of an organic solvent.

25. The process of any one of claims 21 to 24 wherein the polyoxyalkylene polyol in step (b) is selected from propylene oxide polyols, propylene oxide/ethylene oxide copolyols, and mixtures thereof.

26. The process of any one of claims 21 to 25 wherein the polyoxyalkylene polyol in step (b) has a number average molecular weight of from 1000 to 10,000.

27. The process of any one of claims 19 and 21 to 26 wherein the vinyl monomer is selected from monovinyl aromatic monomers, unsaturated nitrile monomers, and mixtures thereof.

28. The process of claim 27 wherein the vinyl monomer is selected from styrene, acrylonitrile and mixtures thereof.

29. A process for producing a grafted polyol-polyacrylate dispersant as claimed in any one of claims 1 to 10 said process comprising the steps of:
(a) copolymerizing said isocyanate vinyl monomer and said acrylate monomer in the presence of an amount of a free radical polymerization initiator effective to form a random copolymer wherein the isocyanate group of the isocyanate vinyl monomer is predominantly unreacted; and
(b) reacting the random copolymer with a polyoxyalkylene polyol miscible with the random copolymer in the presence of an amount of a urethane-forming catalyst effective to accomplish substantially complete reaction of the isocyanate group.

30. The process of claim 29 wherein copolymerization step (a) is carried out in the presence of the polyoxyalkylene polyol.

31. The process of claim 29 wherein copolymerization step (a) is carried out in the presence of an organic solvent.

32. The process of any one of claims 29 to 31 wherein the polyoxyalkylene polyol is selected from propylene oxide polyols. propylene oxide/ethylene oxide copolyols, and mixtures thereof.

33. The process of any one of claims 29 to 32 wherein the polyoxyalkylene polyol has a number average molecular weight of from 1000 to 10,000.

34. A polyurethane comprising the reaction product of a polyisocyanate and a polymer polyol composition as claimed in any one of claims 11 to 18 or a polymer polyol composition including a dispersant as claimed in any one of claims 1 to 10 or a polymer polyol composition obtained by a method or process as claimed in any one of claims 19 to 33.

## Patentansprüche

1. Gepfropftes Polyacrylatpolyol-Dispergiermittel, das, verglichen mit der Stabilität der Polymerpolyol-Zusammensetzung ohne das gepfropfte Polyacrylatpolyol-Dispergiermittel, zur Erhöhung der Stabilität einer Polymerpolyol-Zusammensetzung geeignet ist, wobei das gepfropfte Polyacrylatpolyol-Dispergiermittel umfaßt:
(a) ein statistisches Copolymer, das löslich ist in einem Polyoxyalkylenpolyol aus:
(i) einem Isocyanatvinylmonomer, und
(ii) einem Acrylatmonomer, und
(b) einen Polyoxyalkylenpolyether,
worin das statistische Copolymer und der Polyoxyalkylenpolyether durch mindestens eine Urethan-Pfropfstelle verbunden sind.

2. Gepfropftes Polyacrylatpolyol-Dispergiermittel nach Anspruch 1, wobei mindestens 10 % des Dispergiermittels ein Molekulargewichts-Zahlenmittel von größer als 100.000 besitzt, gemessen durch Gel-Permeationschromatoqraphie im Vergleich mit Polypropylenglycol-Kalibrierunqsstandards.

3. Gepfropftes Polyacrylatpolyol-Dispergiermittel nach Anspruch 1 oder Anspruch 2, wobei das Isocyanatvinylmonomer ein sterisch gehindertes Isocyanatvinylmonomer ist.

4. Gepfropftes Polyacrylatpolyol-Disperqiermittel nach Anspruch 3, wobei das Isocyanatvinylmonomer ein aromatisches (1,1-Dialkyl-1-isocyanatmethyl)-Vinylmonomer ist.

5. Gepfropftes Polyacrylatpolyol-Dispergiermittel nach einem der Ansprüche 1 bis 4, wobei das Acrylatmonomer ein C₂-C₅-Alkylacrylat ist.

6. Gepfropftes Polyacrylatpolyol-Dispergiermittel nach Anspruch 5, wobei das Alkylacrylatmonomer n-Butylacrylat ist.

7. Gepfropftes Polyacrylatpolyol-Dispergiermittel nach einem der Ansprüche 1 bis 6, wobei der Polyoxyalkylenpolyether ausgewählt ist unter Propylenoxid-Polymeren, Propylenoxid/Ethylenoxid-Copolymeren, und Gemischen davon.

8. Gepfropftes Polyacrylatpolyol-Dispergiermittel nach einem der Ansprüche 1 bis 7, wobei der Polyoxyalkylenpolyether ein Molekulargewichts-Zahlenmittel von 1000 bis 10.000 besitzt.

9. Gepfropftes Polyacrylatpolyol-Dispergiermittel nach einem der Ansprüche 1 bis 8, wobei das Gewichtsverhältnis sterisch gehindertes Isocyanatvinylmonomer : Acrylatmonomer von 0,5:99,5 bis 50:50 beträgt.

10. Gepfropftes Polyacrylatpolyol-Dispergiermittel nach Anspruch 9, wobei das Gewichtsverhältnis sterisch gehindertes Isocyanatvinylmonomer : Alkylacrylatmonomer von 2:98 bis 35:65 beträgt.

11. Stabile Polymerpoylol-Zusammensetzung, welche eine kontinuierliche Phase, eine disperse Phase in der kontinuierlichen Phase und ein gepfropftes Polyacrylatpolyol-Disperqiermittel umfaßt, wobei
(A) die disperse Phase Vinylpolymer-Teilchen enthält,
(B) die kontinuierliche Phase ein Polyoxyalkylenpolyol ist, und
(C) das gepfropfte Polyacrylatpolyol-Dispergiermittel ein gepfropftes Polyacrylatpolyol nach einem der Ansprüche 1 bis 10 umfaßt, das in der kontinuierlichen Phase löslich ist,
worin das gepfropfte Polyacrylatpolyol-Dispergiermittel in einer Menge verwendet wird, die zur Erhöhung der Stabilität der so erhaltenen Polymerpolyol-Zusammensetzung, verglichen mit der Stabilität der Polymerpolyol-Zusammensetzung ohne das gepfropfte Polyacrylatpolyol-Dispergiermittel, wirksam ist.

12. Polymerpolyol-Zusammensetzung nach Anspruch 11, wobei das Vinylpolymer ein Styrol/Acrylnitril-Copolymer ist.

13. Polymerpolyol-Zusammensetzung nach Anspruch 11 oder Anspruch 12, wobei das Polyoxyalkylenpolyol ein Molekulargewicht von 1000 bis 10.000 besitzt.

14. Polymerpolyol-Zusammensetzung nach einem der Ansprüche 11 bis 13, wobei das Polyoxyalkylenpolyol ausgewählt ist unter Propylen-oxidpolyolen, Propylenoxid/Ethylenoxid-Copolyolen, und Gemischen davon.

15. Polymerpolyol-Zusammensetzung nach einem der Ansprüche 11 bis 14, wobei das Gewichtsverhältnis disperse Phase : kontinuierliche Phase von 1:19 bis 1:1 beträgt.

16. Polymerpolyol-Zusammensetzung nach einem der Ansprüche 11 bis 15, wobei das gepfropfte Polyacrylatpolyol-Dispergiermittel in einer Menge von 0,1 bis 20 Gew.-%, bezogen auf das Gesamtgewicht der Polymerpolyol-Zusammensetzung, verwendet wird.

17. Stabile Polymerpolyol-Zusammensetzung nach Anspruch 11, wobei die disperse Phase Styrol/Acrylnitril-Copolymer- oder Styrolhomopolymer-Teilchen umfaßt, das Polyoxyalkylenpolyol ein Molekulargewichts-Zahlenmittel von 2000 bis 7000 besitzt, und das gepfropfte Polyacrylatpolyol-Dispergiermittel von einem sterisch gehinderten Isocyanat-Vinylmonomer, einem C₁-C₅-Alkylacrylatmonomer, und einem Polyoxyalkylenpolyether mit einem Molekulargewichts-Zahlenmittel von 2000 bis 7000 abgeleitet ist.

18. Polymerpolyol-Zusammensetzung nach Anspruch 17, wobei das Gewichtsverhältnis Styrol : Acrylnitril in dem Styrol/Acrylnitril-Copolymer von 25:75 bis 99:1 beträgt.

19. Verfahren zur Herstellung einer Polymerpolyol-Zusammensetzung nach Anspruch 11, Anspruch 13 oder Anspruch 14, welches Umsetzen des Polyoxyalkylenpolyols, des gepfropften Polyacrylatpolyol-Dispergiermittels und des Vinylmonomers in Anwesenheit eines freien Radikal-Polymerisationsstarters umfaßt.

20. Verfahren zur Erhöhung der Stabilität eines Polymerpolyols, das zur Vermeidung von Phasentrennung in einer kontinuierlichen Polyoxyalkylenpolyol-Phase dispergierte Vinylpolymer-Teilchen enthält, welches Einbau einer wirksamen Menge eines gepfropften Polyacrylatpolyol-Dispergiermittels nach einem der Ansprüche 1 bis 10 in das Polymerpolyol umfaßt.

21. Verfahren zur Herstellung einer Polymerpolyol-Zusammensetzung nach einem der Ansprüche 11 bis 18, welches die Schritte umfaßt:
(a) Copolymerisieren des Isocyanat-Vinylmonomers und des Acrylatmonomers in Anwesenheit einer Menge eines ersten Teils eines freien Radikal-Polymerisationsstarters, die zur Bildung eines statistischen Copolymers wirksam ist, wobei die Isocyanatgruppe des Isocyanat-Vinylmonomers größtenteils nicht umgesetzt wird,
(b) Umsetzen des statistischen Copolymers mit einem ersten Teil eines Polyoxyalkylenpolyols, das mit dem statistischen Copolymer mischbar ist, in Anwesenheit einer Menge eines Urethan-bildenden Katalysators, die wirksam ist, im wesentlichen eine vollständige Umsetzung der Isocyanatgruppe zu bewirken, wobei ein gepfropftes Polyacrylatpolyol-Dispergiermittel gebildet wird,
(c) Umsetzen des gepfropften Polyacrylatpolyol-Dispergier-mittels, eines zweiten Teils eines Polyoxyalkylenpolyols, und eines Vinylmonomers in Anwesenheit einer Menge eines zweiten Teils eines freien Radikal-Polymerisationsstarters, die zur Bildung der Polymerpolyol-Zusammensetzung wirksam ist, wobei das gepfropfte Polyacrylatpolyol-Dispergiermittel in einer Menge verwendet wird, die, verglichen mit der Stabilität der Polymerpolyol-Zusammensetzung ohne das gepfropfte Polyacrylatpolyol-Dispergiermittel, zur Erhöhung der Stabilität der Polymerpolyol-Zusammensetzung, wirksam ist.

22. Verfahren nach Anspruch 21, wobei die Polymerpolyol-Zusammensetzung nach Schritt (c) mit einem dritten Teil eines Polyoxyalkylenpolyols verdünnt wird.

23. Verfahren nach Anspruch 21 oder Anspruch 22, wobei der Copolymerisationsschritt (a) in Anwesenheit des ersten Teils des Polyoxyalkylenpolyols durchgeführt wird.

24. Verfahren nach Anspruch 21 oder Anspruch 22, wobei der Copolymerisationsschritt (a) in Anwesenheit eines organischen Lösungsmittels durchgeführt wird.

25. Verfahren nach einem der Ansprüche 21 bis 24, wobei das Polyoxyalkylenpolyol in Schritt (b) ausgewählt ist unter Propylenoxid-Polyolen, Propylenoxid/Ethylenoxid-Copolyolen, und Gemischen davon.

26. Verfahren nach einem der Ansprüche 21 bis 25, wobei das Polyoxyalkylenpolyol in Schritt (b) ein Molekulargewichts-Zahlenmittel von 1000 bis 10.000 besitzt.

27. Verfahren nach einem der Ansprüche 19 und 21 bis 26, wobei das Vinylmonomer ausgewählt ist unter aromatischen Monovinylmonomeren, ungesättigten Nitrilmonomeren, und Gemischen davon.

28. Verfahren nach Anspruch 27, wobei das Vinylmonomer ausgewählt ist unter Styrol, Acrylnitril, und Gemischen davon.

29. Verfahren zur Herstellung eines gepfropften Polyacrylatpolyol-Dispergiermittels nach einem der Ansprüche 1 bis 10, welches die Schritte umfaßt:
(a) Copolymerisieren des Isocyanat-Vinylmonomers und des Acrylatmonomers in Anwesenheit einer Menge eines freien Radikal-Polymerisationsstarters, die zur Bildung eines statistischen Copolymers wirksam ist, wobei die Isocyanatgruppe des Isocyanatvinyl-monomers größtenteils nicht umgesetzt wird, und
(b) Umsetzen des statistischen Copolymers mit einem Polyoxyalkylenpolyol, das mit dem statistischen Copolymer mischbar ist, in Anwesenheit einer Menge eines Urethan-bildenden Katalysators, die wirksam ist, im wesentlichen eine vollständige Umsetzung der Isocyanatgruppe zu bewirken.

30. Verfahren nach Anspruch 29, wobei der Copolymerisationsschritt (a) in Anwesenheit des Polyoxyalkylenpolyols durchgeführt wird.

31. Verfahren nach Anspruch 29, wobei der Copolymerisationsschritt (a) in Anwesenheit eines organischen Lösungsmittels durchgeführt wird.

32. Verfahren nach einem der Ansprüche 29 bis 31, wobei das Polyoxyalkylenpolyol ausgewählt ist unter Propylenoxidpolyolen, Propylenoxid/Ethylenoxid-Copolyolen, und Gemischen davon.

33. Verfahren nach einem der Ansprüche 29 bis 32, wobei das Polyoxyalkylenpolyol ein Molekulargewichts-Zahlenmittel von 1000 bis 10.000 besitzt.

34. Polyurethan, das das Reaktionsprodukt eines Polyisocyanats und einer Polymerpolyol-Zusammensetzung nach einem der Ansprüche 11 bis 18 oder einer Polymerpolyol-Zusammensetzung einschließlich eines Dispergiermittels nach einem der Ansprüche 1 bis 10 oder einer Polymerpolyol-Zusammensetzung, die nach einer Methode oder einem Verfahren nach einem der Ansprüche 19 bis 33 erhalten wurde, umfaßt.

## Revendications

1. Dispersant de type polyol-polyacrylate greffé convenable pour améliorer la stabilité d'une composition de polymère polyol par rapport à la stabilité de la composition de polymère polyol en l'absence du dispersant de type polyol-polyacrylate greffé, dans lequel ce dispersant de type polyol-polyacrylate greffé comprend:
(a) un copolymère statistique, soluble dans un polyoxyalkylène polyol de:
(i) un monomère isocyanate-vinylique; et
(ii) un monomère acrylate; et
(b) un polyoxyalkylène polyéther;
dans lequel le copolymère statistique et le polyoxyalkylène polyéther sont reliés par l'intermédiaire d'un moins un site de greffe uréthane.

2. Dispersant de type polyol-polyacrylate greffé suivant la revendication 1, dans lequel au moins 10% du dispersant ont un poids moléculaire moyen en nombre supérieur à 100.000, tel qu'il est mesuré par une chromatographie de perméation de gel par rapport à des normes d'étalonnage de polypropylène glycol.

3. Dispersant de type polyol-polyacrylate greffé suivant les revendications 1 ou 2, dans lequel le monomère isocyanate-vinylique est un monomère isocyanate-vinylique encombré stériquement.

4. Dispersant de type polyol-polyacrylate greffé suivant la revendication 3, dans lequel le monomère isocyanate-vinylique est un monomère (1,1-dialkyl-1-isocyanatométhyl)-vinyl aromatique.

5. Dispersant de type polyol-polyacrylate greffé suivant l'une quelconque des revendications 1 à 4, dans lequel le monomère acrylate est un acrylate d'alkyle en C₂₋₅.

6. Dispersant de type polyol-polyacrylate greffé suivant la revendication 5, dans lequel le monomère acrylate d'alkyle est l'acrylate de n-butyle.

7. Dispersant de type polyol-polyacrylate greffé suivant l'une quelconque des revendications 1 à 6, dans lequel le polyoxyalkylène polyéther est choisi parmi les polymères d'oxyde de propylène, les copolymères d'oxyde de propylène et d'oxyde d'éthylène et leurs mélanges.

8. Dispersant de type polyol-polyacrylate greffé suivant l'une quelconque des revendications 1 à 7, dans lequel le polyoxyalkylène polyéther a un poids moléculaire moyen en nombre de 1.000 à 10.000.

9. Dispersant de type polyol-polyacrylate greffé suivant l'une quelconque des revendications 1 à 8, dans lequel le rapport pondéral du monomère isocyanate-vinylique encombré stériquement au monomère acrylate est de 0,5:99,5 à 50:50.

10. Dispersant de type polyol-polyacrylate greffé suivant la revendication 9, dans lequel le rapport pondéral du monomère isocyanate-vinylique encombré stériquement au monomère acrylate est de 2:98 à 35:65.

11. Composition de polymères polyols stable comprenant une phase continue, une phase dispersée à l'intérieur de la phase continue et un dispersant de type polyol-polyacrylate greffé, dans laquelle :
(A) la phase dispersée comprend des particules de polymère vinylique;
(B) la phase continue est un polyoxyalkylène polyol; et
(C) le dispersant de type polyol-polyacrylate greffé comprend un polyol-polyacrylate greffé suivant l'une quelconque des revendications 1 à 10, soluble dans la phase continue;
dans laquelle le dispersant de type polyol-polyacrylate greffé est employé en une quantité efficace pour augmenter la stabilité de la composition de polymère polyol résultante par rapport à la stabilité de la composition de polymère polyol en l'absence du dispersant de type polyol-polyacrylate greffé.

12. Composition de polymères polyols suivant la revendication 11, dans laquelle le polymère vinylique est un copolymère de styrène et d'acrylonitrile.

13. Composition de polymères polyols suivant les revendications 11 ou 12, dans laquelle le polyoxyalkylène polyol a un poids moléculaire moyen en nombre de 1.000 à 10.000.

14. Composition de polymères polyols suivant l'une quelconque des revendications 11 à 13, dans laquelle le polyoxyalkylène polyol est choisi parmi les polymères d'oxyde de propylène, les copolymères d'oxyde de propylène et d'oxyde d'éthylène et leurs mélanges.

15. Composition de polymères polyols suivant l'une quelconque des revendications 11 à 14, dans laquelle le rapport en poids de la phase dispersée à la phase continue est de 1:19 à 1:1.

16. Composition de polymères polyols suivant l'une quelconque des revendications 11 à 15, dans laquelle le dispersant de type polyol-polyacrylate greffé est employé en une quantité de 0,1 à 20% en poids par rapport au poids total de la composition de polymère polyol.

17. Composition de polymères polyols stable suivant la revendication 11, dans laquelle la phase dispersée comprend des particules de copolymère de styrène/acrylonitrile ou d'homopolymère de styrène; le polyoxyalkylène polyol a un poids moléculaire moyen en nombre de 2.000 à 7.000; et le dispersant de type polyol-polyacrylate greffé dérive d'un monomère isocyanate-vinylique encombré stériquement, d'un monomère acrylate d'alkyle en C₁₋₅, et d'un polyoxyalkylène polyéther ayant un poids moléculaire en nombre de 2.000 à 7.000.

18. Composition de polymères polyols suivant la revendication 17, dans laquelle le rapport pondéral de styrène/acrylonitrile dans le copolymère de styrène/acrylonitrile est de 25:75 à 99:1.

19. Procédé pour la production d'une composition de polymère polyol suivant les revendications 11, 13 ou 14, qui comprend la réaction de ce polyoxyalkylène polyol, de ce dispersant de type polyol-polyacrylate greffé et du monomère vinylique en présence d'un initiateur de polymérisation par des radicaux libres.

20. Procédé pour augmenter la stabilité contre une séparation de phases d'un polymère polyol comprenant des particules de polymère vinylique dispersées dans une phase continue de polyoxyalkylène polyol, le procédé comprenant l'incorporation dans le polymère polyol d'une quantité efficace d'un dispersant de type polyol-polyacrylate greffé suivant l'une quelconque des revendications 1 à 10.

21. Procédé pour la production d'une composition de polymère polyol suivant l'une quelconque des revendications 11 à 18, comprenant les étapes de :
(a) copolymérisation de ce monomère isocyanate-vinylique et de ce monomère acrylate en présence d'une quantité d'une première partie d'un initiateur de polymérisation par radicaux libres efficace pour former un copolymère statistique dans lequel le groupe isocyanate du monomère isocyanate-vinylique n'a pratiquement pas réagi;
(b) réaction du copolymère statistique avec une première partie d'un polyoxyalkylène polyol miscible avec le copolymère statistique en présence d'une quantité d'un catalyseur formant un uréthane efficace pour accomplir une réaction pratiquement complète du groupe isocyanate de façon à former un dispersant de type polyol-polyacrylate greffé;
(c) réaction du dispersant de type polyol-polyacrylate greffé, d'une seconde partie d'un polyoxyalkylène polyol et d'un monomère vinylique en présence d'une quantité d'une seconde partie d'un initiateur de polymérisation par radicaux libres efficace pour former la composition de polymère polyol, ce dispersant de type polyol-polyacrylate greffé étant employé en une quantité efficace pour augmenter la stabilité de la composition de polymère polyol par rapport à la stabilité de la composition de polymère polyol en l'absence du dispersant de type polyol-polyacrylate greffé.

22. Procédé suivant la revendication 21, dans lequel la composition de polymère polyol est diluée après l'étape (c) avec une troisième partie d'un polyoxyalkylène polyol.

23. Procédé suivant les revendications 21 ou 22, dans lequel l'étape (a) de copolymérisation est conduite en présence de la première partie du polyoxyalkylène polyol.

24. Procédé suivant les revendications 21 ou 22, dans lequel l'étape (a) de copolymérisation est conduite en présence d'un solvant organique.

25. Procédé suivant l'une quelconque des revendications 21 à 24, dans lequel le polyoxyalkylène polyol dans l'étape (b) est choisi parmi les polyols d'oxyde de propylène, les copolyols d'oxyde de propylène et d'oxyde d'éthylène et leurs mélanges.

26. Procédé suivant l'une quelconque des revendications 21 à 25, dans lequel le polyoxyalkylène polyol dans l'étape (b) a un poids moléculaire moyen en nombre de 1.000 à 10.000.

27. Procédé suivant l'une quelconque des revendications 19 et 21 à 26, dans lequel le polymère vinylique est choisi parmi des monomères monovinyl-aromatiques, des monomères de type nitrile insaturé et leurs mélanges.

28. Procédé suivant le procédé 27, dans lequel le monomère vinylique est choisi parmi le styrène, l'acrylonitrile et leurs mélanges.

29. Procédé pour la production d'un dispersant de type polyol-polyacrylate greffé suivant l'une quelconque des revendications 1 à 10, ce procédé comprenant les étapes de :
(a) copolymérisation de ce monomère isocyanate-vinylique et de ce monomère acrylate en présence d'une quantité d'un initiateur de polymérisation par radicaux libres efficace pour former un copolymère statistique dans lequel le groupe isocyanate du monomère isocyanate-vinylique n'a pratiquement pas réagi; et
(b) réaction du copolymère statistique avec un polyoxyalkylène polyol miscible avec le copolymère statistique en présence d'une quantité d'un catalyseur formant un uréthane efficace pour accomplir une réaction pratiquement complète du groupe isocyanate.

30. Procédé suivant la revendication 29, dans lequel l'étape de copolymérisation (a) est conduite en présence du polyoxyalkylène polyol.

31. Procédé suivant la revendication 29, dans lequel l'étape de copolymérisation (a) est conduite en présence d'un solvant organique.

32. Procédé suivant l'une quelconque des revendications 29 à 31, dans lequel le polyoxyalkylène polyol est choisi parmi les polyols d'oxyde de propylène, les copolyols d'oxyde de propylène et d'oxyde d'éthylène et leurs mélanges.

33. Procédé suivant l'une quelconque des revendications 29 à 32, dans lequel le polyoxyalkylène polyol a un poids moléculaire moyen en nombre de 1.000 à 10.000.

34. Polyuréthane comprenant le produit de réaction d'un polyisocyanate et d'une composition de polymère polyol suivant l'une quelconque des revendications 11 à 18, ou d'une composition de polymère polyol incluant un dispersant suivant l'une quelconque des revendications 1 à 10, ou d'une composition de polymère polyol obtenue par le procédé suivant l'une quelconque des revendications 19 à 33.
